# EUROPEAN PATENT APPLICATION

(11) **EP 0 934 984 A1**
(43) Date of publication of application: **11.08.1999**
(21) Application number: 97904598.6
(22) Date of filing: 21.02.1997
(51) Int. Cl.: C08L 101/10, C08L 23/26, C08K 5/54, C08K 5/36, C08K 5/39

(54) **CURABLE COMPOSITION**

(30) Priority: 21.02.1996 JP 3393196
(71) Applicant: KANEKA CORPORATION, Osaka-shi, Osaka 530-8288 (JP)
(72) Inventor: CHIBA, Makoto, Kobe-shi, Hyogo 655 (JP); OKAMOTO, Toshihiko, Kobe-shi, Hyogo 655 (JP); SAKAGUCHI, Masashi, Kakogawa-shi, Hyogo 675 (JP); TAKASE, Junji, Akashi-shi, Hyogo 673 (JP)
(74) Representative: Hubert, Philippe
(86) International application number: JP9700485
(87) International publication number: WO9731066

(57) **Abstract**

It is an object of the present invention to provide a curable composition comprising a crosslinking silyl-containing saturated hydrocarbon polymer and providing good weather-resistant adhesion.

The present invention relates to a curable composition comprising (A) a saturated hydrocarbon polymer having at least one crosslinking silyl group, (B) a nickel atom-containing light stabilizer and (C) a silane coupling agent.

## Description

### FIELD OF THE INVENTION

The present invention relates to a curable composition and, more particularly, to a curable composition comprising a saturated hydrocarbon polymer and capable of giving cured products excellent in weathering resistance.

### PRIOR ART

Curable polymers are substances which occur as liquids or the like and can easily be molded before curing and, after curing, form solids such as rubber-like materials having high strength. Curable polymers are often used in adhesive or sealing compositions. In case of being applied to glass or plastic materials in adhesives or sealants, unlike those to be applied to opaque materials, are required to be free from deterioration resulting from light irradiation, since the bonded areas are exposed to light. Once deteriorated by light, the adhesives or sealants may no longer perform their functions, allowing peeling in the bonded area, for instance. The adhesion after light irradiation is referred to as weather-resistant adhesion and is an important factor to adhesive or sealing compositions of transparent materials. In the field of construction, in particular, good weather-resistant adhesion is required for a prolonged period of time. However, the adhesive layers are very thin, and therefore, even materials slightly poor in weathering resistance will lead to poor weather-resistant adhesion. Not many materials are excellent in weather-resistant adhesion.

Saturated hydrocarbon polymers having a crosslinking silyl group are a group of curable polymers and are cured with the action of atmospheric moisture, for instance. The cured products obtained from these polymers have such characteristics as high weathering resistance, heat resistance, water-resistant adhesion, antistaining property and low moisture permeability. Furthermore, they can give fluids having appropriate viscosity and structural viscosity (thixotropy) at room temperature, which therefore have good processability and sprayability, among others. Said polymers are almost odorless and do not emit any odor during processing thereof, hence are favorably used particularly as sealing materials (e.g. Japanese Kokai Publications sho-63-6041). Japanese Kokai Publications Hei-01-198673 discloses that said polymers can be used as sealing materials for laminated glass and thus can be used for transparent materials as well. When they are used in laminated glass, rapid curing can be attained by warming, hence the speed of the production line can be increased; another merit lies in that the conventional double sealing can be replaced by single sealing. Of course, they can be used in double-sealed laminated glass as well.

It was revealed, however, that, in some instances, crosslinking silyl-containing saturated hydrocarbon polymers cannot provide cured products with sufficient weather-resistant adhesion when they are used for certain transparent materials, in particular surface-treated glass species such as infrared reflecting glass. The present inventors found that when said polymers are used according to a specific formulation, the cured products obtained therefrom can have excellent weather-resistant adhesion to the surface-treated glass as well.

### SUMMARY OF THE INVENTION

It is an object of the present invention to provide a curable composition comprising a crosslinking silyl-containing saturated hydrocarbon polymer and providing good weather-resistant adhesion.

The present inventors found that a specific composition containing a crosslinking silyl-containing saturated hydrocarbon polymer can provide excellent weather-resistant adhesion. Thus, the present invention relates to a curable composition comprising (A) a saturated hydrocarbon polymer having at least one cross linking silyl group, (B) a nickel atom-containing light stabilizer and (C) a silane coupling agent.

### DETAILED DESCRIPTION OF THE INVENTION

The saturated hydrocarbon polymer, which is component (A) according to the present invention, has at least one crosslinking silyl group, that is to say, a silicon-containing group having a hydrolyzable group bound to the silicon atom and capable of crosslinking under siloxane bond formation. The crosslinking silyl-containing saturated hydrocarbon polymer is substantially free of any carbon-carbon unsaturated bond other than aromatic ring double bonds and includes, among others, polyethylene, polypropylene, polyisobutylene, hydrogenated polybutadiene and hydrogenated polyisoprene.

The crosslinking silyl group is, for example, a group represented by the general formula (1) 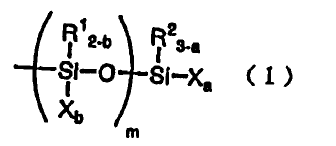 (wherein each of R¹ and R² independently represents either an alkyl group containing 1 to 20 carbon atoms, an aryl group containing 6 to 20 carbon atoms, an aralkyl group containing 7 to 20 carbon atoms or a triorganosiloxy group of the formula (R')₃SiO- (in which each of R' groups independently is a substituted or unsubstituted hydrocarbon group containing 1 to 20 carbon atoms); each of X's independently represents a hydroxyl group or a hydrolyzable group; a is 0, 1, 2 or 3 and b is 0, 1 or 2, excluding the case where a and b are at the same time equal to 0; and m is an integer of 0 or 1 to 19).

The hydrolyzable group includes, among others, a hydrogen atom, alkoxy groups, acyloxy groups, ketoximate groups, an amino group, amido groups, an aminoxy group, a mercapto group, alkenyloxy groups and other groups generally used.

Among these, alkoxy, amido and aminoxy groups are preferred and, from the viewpoint of mild hydrolyzability and ease of handling, alkoxy groups are most preferred.

A total of one to three hydrolyzable groups and/or hydroxyl groups can be bound to one silicon atom, the sum (a + Σb) being preferably within the range of 1 to 5. In cases where the crosslinking silyl group contains two or more hydrolyzable and/or hydroxyl groups, these may be the same or different.

While one or more silicon atoms are required to form the crosslinking silyl group, the number of silicon atoms, when they are connected with one another via siloxane bonding, is preferably not more than 20. In particular, crosslinking groups of the general formula (2) 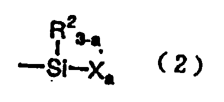 (wherein R², X and a are as defined above), are preferred since they are readily available.

The number of crosslinking silyl groups contained in each molecule of the saturated hydrocarbon polymer is not less than 1, preferably 1.1 to 5. If said number is less than 1, insufficient curability may result, leading to failure to obtain good rubber elasticity.

The crosslinking silyl groups may occur at one or both ends of the saturated hydrocarbon polymer and/or at an internal site or sites thereof. In particular, it is preferred that the polymer molecule has a terminal crosslinking silyl group or groups, since the cured products finally formed can contain an increased amount of effective network chains derived from the saturated hydrocarbon polymer component and therefore can readily occur rubber-like cured products with high strength and high elongation.

These crosslinking silyl-containing saturated hydrocarbon polymers may be used singly or two or more of them may be used in combination.

The polymer constituting the skeleton of the crosslinking silyl-containing saturated hydrocarbon polymer can be prepared, for example, by (1) polymerizing an olefin compound containing 1 to 6 carbon atoms, such as ethylene, propylene, 1-butene or isobutylene, as the main monomer or (2) homopolymerizing a diene compound such as butadiene or isoprene or copolymerising the same with an olefin compound such as mentioned above, and then hydrogenating. Isobutylene polymers and hydrogenated polybutadiene polymers are preferred, since it is easy to introduce the functional groups terminally thereinto, their molecular weight can easily be controlled and, furthermore, the number of terminal functional groups can be increased.

The isobutylene polymers may be wholly constituted of isobutylene units alone or may contain units of a monomer or monomers copolymerizable with isobutylene preferably in an amount of not more than 50% (% by weight; hereinafter the same shall apply), more preferably not more than 30%, most preferably not more than 10% of the isobutylene copolymer.

Such monomer components include, among others, olefins containing 4 to 12 carbon atoms, vinyl ethers, aromatic vinyl compounds, vinylsilanes and allylsilanes. As specific examples of such copolymerizable components, there may be mentioned 1-butene, 2-butene, 2-methyl-1-butene, 3-methyl-1-butene, pentene, 4-methyl-1-pentene, hexene, vinylcyclohexene, methyl vinyl ether, ethyl vinyl ether, isobutyl vinyl ether, styrene, α-methylstyrene, dimethylstyrene, monochlorostyrene, dichlorostyrene, β -pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane, γ-methacryloyloxypropylmethyldimethoxysilane, etc.

When a vinylsilane or allylsilane is used as the monomer copolymerizable with isobutylene, an increased silicon content, hence an increased number of groups capable of acting as silane coupling agents, can be obtained, so that the adhesion property of the composition prepared therefrom is improved.

In the case of hydrogenated polybutadiene polymers and other saturated hydrocarbon polymers, other monomer units than the main component monomer units may be contained therein, like in the case of the above-mentioned isobutylene polymers, too.

The cross linking silyl-containing saturated hydrocarbon polymer to be used in the practice of the present invention may contain monomer units retaining a double bond after polymerization, for example a polyene compound such as butadiene or isoprene, in a minor proportion within limits within which the object of the present invention can be achieved, preferably not more than 10%, more preferably not more than 5%, most preferably not more than 1%.

From the viewpoint of easy handling, among others, it is preferred that the saturated hydrocarbon polymer, preferably an isobutylene polymer or hydrogenated polybutadiene polymer, have a number average molecular weight of about 500 to 30,000, more preferably about 1,000 to 15,000, and occur as a liquid or flowable matter.

The method of producing the crosslinking silyl-containing saturated hydrocarbon polymers is now described.

Among the crosslinking silyl-containing isobutylene polymers, those isobutylene polymers having a terminal crosslinking silyl group or groups can be produced by using an isobutylene polymer of the terminal function type, preferably of the full terminal function type, obtained by a polymerization called the inifer method (cationic polymerization using a specific compound called an inifer which serves as an initiator and at the same time as a chain transfer agent). Thus, for example, mention may be made of the method comprising preparing an unsaturated group-terminated polyisobutylene by subjecting the above-mentioned isobutylene polymer to hydrogen halide elimination reaction or by unsaturated group introduction into a polymer as described in Japanese Kokai Publications sho-63-105005 and then introducing a crosslinking silyl group into the polymer by an addition reaction called hydrosilylation using a hydrosilane compound of the general formula 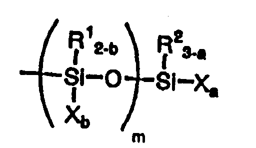 (wherein R¹, R², X, a and b are as defined above) (this compound is a compound composed of the group of general formula (1) and a hydrogen atom bound thereto), preferably a hydrosilane compound of the general formula 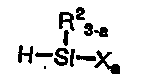 (wherein R², X and a are as defined above), and a platinum catalyst. The hydrosilane compound includes, but is not limited to, halosilanes such as trichlorosilane, methyldichlorosilane, dimethylchlorosilane and phenyldichlorosilane; alkoxysilanes such as trimethoxysilane, triethoxysilane, methyldiethoxysilane, methyldimethoxysilane and phenyldimethoxysilane; acyloxysilanes such as methyldiacetoxysilane and phenyldiacetoxysilane; ketoximatosilanes such as bis(dimethylketoximato)methylsilane and bis(cyclohexylketoximato)methylsilane; and the like. Among these, halosilanes and alkoxysilanes are particularly preferred.

Such production methods are described, for example, in Japanese Kokoku Publications Hei-04-69659 and Hei-07-108928, and Japanese Kokai Publications Sho-63-254149, Sho-64-22904 and Sho-64-38407.

Isobutylene polymers having crosslinking silyl groups internally on the molecular chain thereof are produced by adding a crosslinking silyl-containing vinylsilane or allylsilane to a monomer composition mainly comprising isobutylene and subjecting the mixture to copolymerization.

Further, on the occasion of producing an isobutylene polymer having a terminal crosslinking silyl group or groups, a monomer composition comprising isobutylene monomer as the main component and a crosslinking silyl-containing vinylsilane or allylsilane is subjected to copolymerization and then a crosslinking silyl group is introduced terminally into the copolymer, an isobutylene polymers having terminal and internal cross linking silyl groups on the molecular chain thereof is produced.

As the crosslinking silyl-containing vinylsilane or allylsilane, there may be mentioned vinyltrichlorosilane, vinylmethyldichlorosilane, vinyldimethylchlorosilane, vinyldimethylmethoxysilane, divinyldichlorosilane, divinyldimethoxysilane, allyltrichlorosilane, allylmethyldichlorosilane, allyldimethylchlorosilane, allyldimethylmethoxysilane, diallyldichlorosilane, diallyldimethoxysilane, γ-methacryloyloxypropyltrimethoxysilane, γ-methacryloyloxypropylmethyldimethoxysilane, and the like.

In the case of the hydrogenated polybutadiene polymers mentioned above, for example, the hydroxyl group or groups of a hydroxyl-terminated hydrogenated polybutadiene polymer is first converted to oxymetal groups such as -ONa or -OK and then reacting it with an organohalogen compound of the general formula (3)

CH₃=CH-R³-Y (3)

(wherein Y is a halogen atom such as a chlorine or iodine atom and R³ is a divalent organic group of the formula -R⁴-, -R⁴-OCO- or -R⁴-CO- (in which R⁴ is a divalent hydrocarbon group containing 1 to 20 carbon atoms, preferably an alkylene, cycloalkylene, arylene or aralkylene group), preferably a divalent group selected from among -CH₂-, -R''-C₆H₃-CH₂- (R'' being a hydrocarbon group containing 1 to 10 carbon atoms)), whereby a hydrogenated polybutadiene polymers having a terminal olefin group or groups is produced.

The method of converting the terminal hydroxyl groups of a hydroxyl-terminated hydrogenated polybutadiene polymer to oxymetal groups comprises, for example, reacting the hydroxyl groups with an alkali metal such as Na or K; a metal hydride such as NaH; a metal alkoxide such as NaOCH₃; or an alkali hydroxide such as NaOH or KOH.

While the olefin-terminated hydrogenated polybutadiene polymer obtained by the above-mentioned method has almost the same molecular weight as that of the starting hydroxyl-terminated hydrogenated polybutadiene polymer, an olefin-terminated hydrogenated polybutadiene polymer having a higher molecular weight, if desired, can be obtained by reacting the starting polymer, prior to the reaction with the organohalogen compound of general formula (3), with a polyvalent organohalogen compound containing two or more halogen atoms per molecule, for example methylene chloride, bis(chloromethyl)benzene or bis (chloromethyl) ether, to thereby increase the molecular weight, and then reacting the thus-obtained polymer with the organohalogen compound of general formula (3).

The above-mentioned organohalogen compound of general formula (3) includes, but is not limited to, allyl chloride, allyl bromide, vinyl(chloromethyl)benzene, allyl(chloromethyl)benzene, allyl(bromomethyl)benzene, allyl(chloromethyl)ether, allyl(chloromethoxy)benzene, 1-butenyl (chloromethyl) ether, 1-hexenyl(chloromethoxy)benzene and allyloxy(chloromethyl)benzene, among others. Among these, allyl chloride is preferred since it is inexpensive and readily reactive.

Crosslinking silyl groups can be introduced into the above-mentioned olefin-terminated hydrogenated polybutadiene polymers by carrying out the addition reaction of a hydrosilane compound using a platinum catalyst, as in the case of the crosslinking silyl-terminated isobutylene polymers mentioned hereinabove.

When the crosslinking silyl-containing saturated hydrocarbon polymer is substantially free of unsaturated bonds other than aromatic ring double bonds, as mentioned above, markedly improved weathering resistance can be obtained as compared with those sealing compositions comprising conventional rubber-like polymers such as unsaturated bond-containing organic polymers or oxyalkylene polymers. Said polymer, which is a hydrocarbon polymer, has good moisture barrier and water resistance properties. In addition, it shows a good adhesive property in the face of various inorganic substrates such as glass and aluminum, giving cured products with high moisture barrier properties.

The content of the crosslinking silyl-containing saturated hydrocarbon polymer in the curable composition of the present invention is preferably not less than 10%, more preferably not less than 20%, most preferably not less than 30%.

The light stabilizer to be used as component (B) according to the present invention is commercially available as a nickel-containing light stabilizer. Typical examples are nickel dithiocarbamates such as nickel dimethyldithiocarbamate, nickel diethyldithiocarbamate and nickel dibutyldithiocarbamate, nickel complexes such as [2,2'-thiobis(4-t-octylphenolato)]-n-butylamine-nickel, [2,2'-thiobis(4-t-octylphenolato)]-2-ethylhexylamine-nickel, [2,2'-thiobis(4-t-octylphenolato)]-triethanolamine-nickel, and nickel compounds such as nickel bis(octylphenyl)sulfide and nickel isopropylxanthate. These light stabilizers may be used either singly or in combination of two or more.

The addition level of this component (B) is preferably about 0.1 to 20 parts (weight parts; hereinafter the same shall apply), more preferably 1 to 10 parts, per 100 parts of component (A), namely the saturated hydrocarbon polymer. When the proportion of component (B) is below the above range, the weather-resistant adhesive property to glass or the like may be low in some cases. Higher addition of component (B) exceeding said range are undesirable from the cost viewpoint. Presumably, the nickel-containing light stabilizer is effective in preventing the adhesion improving effect of the silane coupling agent used as component (C) from reducing under the influence of light. This effect of the nickel-containing light stabilizer is thought to be better than the effects of other stabilizers.

The silane coupling agent to be used as component (C) according to the present invention improves the strength of the bond between an adherend or substrate and the product of curing of the crosslinking silyl-containing saturated hydrocarbon polymer. The silane coupling agent is a compound having a group containing a silicon atom with at least one hydrolyzable group bound thereto (hereinafter referred to as hydrolyzable silyl group) and a functional group other than the hydrolyzable silyl group. As examples of this hydrolyzable silyl group, there may be mentioned those groups represented by general formula (1) in which X is a hydrolyzable group. More specifically, the hydrolyzable group includes those examples already mentioned hereinabove, among which methoxy, ethoxy and the like are preferred from the rate of hydrolysis viewpoint. The number of hydrolyzable groups is preferably not less than 2, more preferably not less than 3.

The functional group other than the hydrolyzable silyl group includes, among others, primary, secondary and tertiary amino groups, mercapto, epoxy, carboxyl, vinyl, isocyanate, isocyanurate and halogens. Among these, primary, secondary and tertiary amino groups, epoxy, isocyanate and isocyanurate are preferred and isocyanate is more preferred.

As typical examples of the silane coupling agent, there may be mentioned amino-containing silanes such as γ -aminopropyltrimethoxysilane, γ-aminopropyltriethoxysilane, γ-aminopropylmethyldimethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-ureidopropyltrimethoxysilane, n-β-(n-vinylbenzylaminoethyl)-γ-aminopropyltriethoxysilane and γ-anilinopropyltrimethoxysilane; mercapto-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy-containing silanes such as γ-glycidoxypropyltrimethoxysilane, γ-glycidoxypropyltriethoxysilane, γ-glycidoxypropylmethyldimethoxysilane and β-(3,4-epoxycyclohexyl)-ethyltriethoxysilane; carboxysilanes such as β-carboxyethyltriethoxysilane, β-carboxyethylphenyl-bis(2-methoxyethoxy)silane and β-(n-carboxymethylaminoethyl)-γ-aminopropyltrimethoxysilane; vinyl type unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanuratosilanes such as tris(trimethoxysilyl) isocyanurate; and isocyanato-containing silanes such as γ -isocyanatopropyltrimethoxysilane and γ-isocyanatopropyltriethoxysilane. Also usable as the silane coupling agent are derivatives obtained from those mentioned above by modification, for example amino-modified silyl polymers, silylated amino polymers, unsaturated aminosilane complexes, blocked isocyanatosilanes, phenylamino-long chain alkylsilanes, aminosilylated silicones, silylated polyosters and the like.

In the practice of the present invention, the silane coupling agent is used in an amount within the range of 0.01 to 20 parts per 100 parts of the crosslinking silyl-containing saturated hydrocarbon polymer. In particular, it is preferred that said agent be used within the range of 0.1 to 10 parts. The silane coupling agents specifically mentioned above may be used single or two or more of them may be used in admixture.

The composition of the present invention may further contain an adhesiveness promoting agent other than the silane coupling agent. As examples of the adhesiveness promoting agent other than the silane coupling agent, there may be mentioned epoxy- or isocyanato-containing compounds (inclusive of isocyanate oligomers).

The composition of the present invention may further contain various components when necessary. As such components, there may be mentioned, for example, hardening catalyst s promoting the silanol condensation reaction, shelf life prolonging agents preventing the composition of the present invention from curing during storage, plasticisers, fillers, antioxidants, antiosonants, phosphorus-containing oxide decomposing agents, lubricants, foaming agents, and the like.

As regards the hardening catalyst s, those so far known as silanol condensation catalysts can be used. Typical examples thereof are titanate esters such as tetrabutyl titanate and tetrapropyl titanate; tin carboxylates such as dibutyltin dilaurate, dibutyltin maleate, dibutyltin diacetate, stannous octylate and stannous naphthenate; reaction products from dibutyltin oxide and phthalate esters; dibutyltin diacetylacetonate; organoaluminum compounds such as aluminum triacetylacetonate, aluminum tris(ethyl acetoacetate) and diisopropoxyaluminum ethyl acetoacetate; chelate compounds such as zirconium tetraacetylacetonate and titanium tetraacetylacetonate; lead octylate; amines such as butylamine, octylamine, laurylamine, dibutylamine, monoethanolamine, diethanolamine, triethanolamine, diethylenetriamine, triethylenetetramine, oleylamine, cyclohexylamine, bensylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidasole and 1,8-diasabicyclo(5.4.0)undecene-7 (DBU), and carboxylic acid salts and other salts of these amine compounds; low-molecular polyamide resins obtained from an excess polyamine and a polybasic acids; reaction products from an excess polyamine and an epoxy compound; amino-containing silane coupling agents such as γ-aminopropyltrimethoxysilane and N-(β-aminoethyl)-aminopropylmethyldimethoxysilane; other silanol conjugated catalysts, as well as other known silanol condensation catalysts such as acid catalysts and basic catalysts. These catalysts may be used singly or two or more of them may be used in combination.

The addition level of the hardening catalyst is preferably about 0.1 to 20 parts, more preferably 1 to 10 parts, per 100 parts of component (A), namely the saturated hydrocarbon polymer. At an addition level below the above range, the rate of curing may be slow and, in some cases, the curing reaction may hardly proceed to a satisfactory extent. At an addition level exceeding the above range, local heat generation or foaming may occur during curing, making it difficult to obtain good cured products and, in addition, the pot life will be too short and this is unfavorable from the viewpoint of workability.

### BEST MODES FOR CARRYING OUT THE INVENTION

The following examples illustrate the present invention infurther detail. They are, however, by no means limitative of the scope thereof.

### Production Example

### Production of saturated hydrocarbon polymer (A)

A one-liter autoclave made of strengthened glass for pressure was charged with 7.5 mmol of a compound (p-DCC) of the formula: 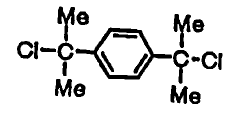 The autoclave was then equipped with an agitation blade, a three-way cock and a vacuum line, and purged with nitrogen. Then, while nitrogen was passed through the autoclave via one passage of the three-way cock, a mixed solvent composed of 330 mL of toluene and 141 mL of hexane, each dried by molecular sieve treatment, was fed to the autoclave using a syringe, followed by addition of 3.0 mmol of α-picoline as an additive.

Then, a strengthened glass-made liquefied gas sampler equipped with a needle valve and containing 113 g of isobutylene dehydrated by passage through a column packed with barium oxide was connected to the three-way cock, the vessel body was immersed in a dry ice-acetone bath at - 70°C and the polymerization vessel inside was cooled for an hour with stirring. After cooling, the reactor inside was depressurised through the vacuum line and then the needle valve was opened to thereby introduce the isobutylene into the polymerization vessel from the strengthened glass-made liquefied gas sampler. Thereafter, the vessel inside was returned to ordinary pressure by feeding nitrogen via one passage of the three-way cock.

Then, after it was confirmed that the polymerization vessel inside was stabilized at -70°C, the polymerization was initiated by adding, using a syringe, 7.18 g (3.8 mmol) of TiCl4 through the three-way cock. After the lapse of 2 hours, 2.57 g (22.5 mmol) of allyltrimethylsilane was added. After allowing the reaction to proceed for a further hour, the catalyst was deactivated by pouring water into the reaction mixture. Then, the organic layer was washed with three portions of pure water and, after phase separation, the solvent was distilled off under reduced pressure to give an allyl-terminated isobutylene polymer.

Then, 100 g of the thus-obtained allyl-terminated isobutylene polymer was dissolved in 50 mL of n-heptane, the solution was heated to about 70°C, and methyldimethoxysilane 1.2 [eq./allyl group] and platinumvinylsiloxane complex 1 x 10⁻⁴ [eq./allyl group] were added to thereby allow the hydrosilylation reaction to proceed. The reaction was monitored by FT-IR spectroscopy and, after about 4 hours, the disappearance of the absorption at 1640 cm⁻¹ ascribable to the olefin was confirmed, and the reaction was terminated. The reaction mixture was concentrated under reduced pressure to give the desired isobutylene polymer having the cross linking silyl groups at both ends (hereinafter sometimes referred to also as "PIB").

The yield rate was calculated from the yield of the thus-obtained polymer, the Mn and Mw/Mn were determined by GPC method(using polystyrene standards), and the terminal structure was determined by measuring and comparing the intensities of resonance signals of protons ascribable to the respective structures (initiator-derived protons: 6.5 to 7.5 ppm; protons of the methyl group bound to the silicon atom of the polymer terminus origin: 0.0 to 0.1 ppm; and methoxy protons: 3.5 to 3.4 ppm) by ¹H-NMR analysis. The ¹H-NMR measurements were made in CDCl₃ using a Varian Gemini 300 (300 MHz for ¹H).

The FT-IR spectroscopy was performed using Shimadzu IR-408, and the GPC using Water LC Module 1 as the liquid feeding system and Shodex K-804 (polystyrene gel) as the column. The molecular weight is given as a molecular weight relative to the polystyrene standards. The results of analysis of the polymer were as follows: Mn = 11,416, Mw/Mn = 1.47, Fn (silyl) = 1.95 (the number average molecular weight being a polystyrene equivalent and the number of terminal silyl functions being the number per isobutylene polymer molecule).

### Example 1

To 100 parts of the polymer obtained in the production example were added 90 parts of a paraffin-based process oil (trademark: Diana Process PS-32; product of Idemitsu Kousan) as a plasticizer, 360 parts of ground calcium carbonate (trademark: Whiton SB; product of Shiraishi Calcium) as a filler, 5 parts of sodium sulfate (Na₂SO₄· 10H₂O) as a subhardening agent, 1 part of tetrakis-[methylene-3-(3',5'-di -t-butyl-4-hydroxyphenyl)propionate]-methane (trademark: Irganox 1010; product of Ciba Geigy) as an antioxidant, 1 part of 2-(2'-hydroxy-3',5'-t-butyl)-5-chlorobenzotriazole (trademark: Tinuvin 327; product of Ciba Geigy) as a further stabilizer, 1 part of bis(2,2,6,6-tetramethyl-4-piperidyl) sebacate (trademark: Sanol LS-770; product of Sankyo) as a further stabilizer, 5 parts of a thixotropic agent (trademark: Disparlon #305; product of Kusumoto), 2 parts of γ-isocyanatopropyltriethoxysilane (trademark: Y-9030; product of Nippon Unicar) as a silane coupling agent, and 3 parts of nickel dimethyldithiocarbamate (trademark: Sandant NBC; product of Sanshin Chem.; the chemical structure thereof being shown below), and the mixture was well kneaded in a three-roll paint mill to give a base resin. 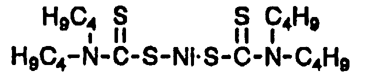 Separately, a curing agent was prepared by manually kneading 10 parts of a paraffin-based process oil (trademark: Diana Process PS-32; product of Idemitsu Kousan), 25 parts of ground calcium carbonate (Whiton SB; product of Shiraishi Calcium), 4 parts of a tetravalent tin compound (trademark: U-220; product of Nitto Kasei) as a hardening catalyst and 2.5 parts of carbon black (trademark: CB #30; product of Mitsubishi Chem.) in a disposable cup, followed by three repetitions of 10 minutes of stirring at a speed of rotation of 10,000 rpm in an Excel Auto homogenizer (product of Nippon Seiki Seisakusho).

Test specimens were prepared according to the method of preparing test specimens for tensile bond strength testing as specified in JIS A 5758-1992. Thus, glass or aluminum substrates were assembled into H forms, the above-mentioned base resin and curing agent composition were weighed in a weight ratio of 14:1 and, after sufficient kneading, the resulting composition was filled into the H molds and cured in an oven. In all cases, the aging conditions were as follows: 23°C x 7 days + 50°C x 7 days. The substrate material used for H-form tensile testing was an infrared reflexing glass species surface-coated with TiOx by sputtering (trademark: SGY-32, TCB-35; product of Central Glass; size: 5 x 5 x 0.6 cm). Prior to filling of the test composition, the adherends were washed with methyl ethyl ketone (special reagent grade; product of Wako Pure Chemical) and wiped with a clean cotton cloth.

The H-form tensile testing samples prepared by the above method were subjected to weather-resistant adhesion testing. Before and after testing, the H-form mechanical characteristics were measured. The results thus obtained are shown in Table 1. The weather-resistant adhesion test was performed by placing the H-form tensile testing samples in a Suga Shiken's sunshine superlong life weather meter WEL-SUN-HC in which sunshine carbon was used as the light source and the black panel temperature was set at 63°C and taking out the samples after 480 hours. The H-form mechanical characteristics were measured according to the tensile bond strength testing method prescribed in JIS A 5758-1992 in a constant-temperature room at a temperature of 23 °C and a humidity of 65 ± 5% and at a rate of pulling of 50 mm/min. The proportions of cohesive failure (CF), thin-layer cohesive failure (TCF) and adhesion failure (AF) are proportions obtained by evaluation of the rupture cross-sections after tensile testing by the eye. "Cohesive failure" is the rupture of the cured product itself, not on the interface between the adherend and cured product, meaning that the bond strength between the adherend and cured product is great. "Adhesion failure" is peeling of the adherend and cured product from each other on the interface between them, meaning that the bond strength between the adherend and cured product is low. "Thin layer cohesive failure" is cohesive failure with the rupture occurring in the interface between the adherend and cured product and means that the bond strength is intermediate between cohesive failure and adhesion failure.

### Comparative Examples 1 to 3

The procedure of Example 1 was followed except that 3 parts of the light stabilizer nickel dimethyldithiocarbamate (Sandant NBC; product of Sanshin Chem.) was not used (Comparative Example 1). Further, the procedure of Comparative Example 1 was followed except that the amount of the nickel-free stabilizer 2-(2'-hydroxy-3',5'-t-butyl)-5-chlorobenzotriazole (trademark: Tinuvin 327; product of Ciba Geigy) was increased to 3 parts (Comparative Example 2). Further, the procedure of Comparative Example 1 was followed except that the amount of the nickel-free stabilizer bis(2,2,6,6-tetramethyl-4-piperidyl)sebacate (Sanol LS-770; product of Sankyo) was increased to 5 parts (Comparative Example 3). The results are shown in Table 1.

**Table 1**

| No. Before testing | M50 (kgf/cm²) | Tmax (kgf/cm²) | Emax (%) | State of rupture (%) | | |
|---|---|---|---|---|---|---|
| | | | | CF | TCF | AF |
| Example 1 | 5.3 | 6.6 | 70 | 100 | 0 | 0 |
| Comparative Example 1 | 4.8 | 6.3 | 77 | 99 | 0 | 1 |
| Comparative Example 2 | 4.8 | 6.4 | 80 | 100 | 0 | 0 |
| Comparative Example 3 | 4.7 | 6.6 | 83 | 100 | 0 | 0 |

| No. After testing | M50 (kgf/cm²) | Tmax (kgf/cm²) | Emax (%) | State of rupture (%) | | |
|---|---|---|---|---|---|---|
| | | | | CF | TCF | AF |
| Example 1 | 3.5 | 5.3 | 95 | 100 | 0 | 0 |
| Comparative Example 1 | 3.5 | 3.8 | 58 | 0 | 0 | 100 |
| Comparative Example 2 | 2.9 | 3.2 | 60 | 0 | 0 | 99 |
| Comparative Example 3 | 2.7 | 3.2 | 66 | 1 | 0 | 99 |
| M50 is the tensile stress at 50% elongation. Tmax is the maximum tensile stress. Emax is the maximum elongation. | | | | | | |

As can be seen from Table 1, the samples of Example 1 and Comparative Examples 1 to 3 all showed good adhesion to the surface-treated glass SGY-32 before the weather-resistant adhesion test, but, after weathering, the sample of Example 1 alone showed cohesive failure while the samples of Comparative Examples 1 to 3 showed adhesion failure. It is thus seen that the addition of the Ni-containing stabilizer (Sandant NBC) leads to an improvement in weather-resistant adhesion.

### Example 2 and Comparative Example 4

The procedure of Example 1 was followed except that 3 parts of the Ni-containing light stabilizer nickel dimethyldithiocarbamate (Sandant NBC; product of Sanshin Chem.) was replaced with 3 parts of another Ni-containing light stabilizer, i.e. [2,2'-thiobis(4-t-octylphenolato)]-n-butylamine-nickel (trademark: SYASORB UV 1084; product of ACC; the chemical structure being as shown below) (Example 2). 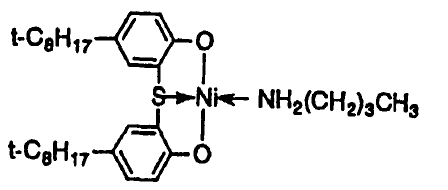 The procedure of Example 2 was followed except that 3 parts of a Ni-free light stabilizer, i.e. 3,5-di-t-butyl-4-hydroxybenzoic acid n-hexadecyl ester (trademark: SYASORB UV 2908; product of ACC; the chemical structure being as shown below) was substituted for 3 parts of the Ni-containing light stabilizer [2,2'-thiobis(4-t-octylphenolate)]-n-butylamine-nickel (trademark: SYASORB UV 1084; product of ACC) (Comparative Example 4). 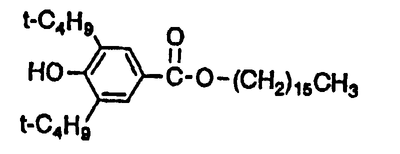 The results are shown in Table 2.

### Example 3 and Comparative Example 5

The procedure of Example 1 was followed except that 20 parts of ground calcium carbonate (tademark: Whiton SB; product of Shiraishi Calcium) was used as a curing agent in lieu of 25 parts of the same ground calcium carbonate (Example 3). Further, the procedure of Example 3 was followed except that 3 parts of a Ni-free iight stabilizer, 2,4-dibutylphenyl 3',5'-di-t-butyl-4'-hydroxybenzoate (trademark: SYASORB 712, product of ACC; the chemical structure being as shown below) was used in lieu of 3 parts of the Ni-containing light stabilizer nickel dimethyldithiocarbamate (trademark: Sandant NBC, product of Sanshin Chem.) (Comparative Example 5). 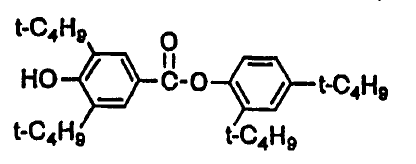 The results are shown in Table 2.

**Table 2**

| No. | M50 (kgf/cm²) | Tmax (kgf/cm²) | Emax (%) | State of rupture (%) | | |
|---|---|---|---|---|---|---|
| | | | | CF | TCF | AF |
| Example 2 | 3.4 | 5 | 98 | 100 | 0 | 0 |
| Example 3 | 3.6 | 5.6 | 90 | 100 | 0 | 0 |
| Comparative Example 4 | 2.9 | 3.3 | 59 | 3 | 15 | 82 |
| Comparative Example 5 | 3.1 | 3.3 | 54 | 8 | 0 | 92 |
| M50: tensile stress at 50% elongation. Tmax: maximum tensile stress. Emax: maximum elongation. | | | | | | |

As seen in Table 2, after weather-resistant adhesion testing, the sample of Examples 2 and 3 showed cohesive failure while the samples of Comparative Examples 4 and 5 showed adhesion failure. This indicates that the addition of the Ni-containing light stabilizer results in improved weather-resistant adhesion.

### Example 4

To 100 parts of the polymer obtained in the production example were added 90 parts of a paraffin-based process oil (trademark: Diana Process PS-32; product of Idemitsu Kousan), 30 parts of ground calcium carbonate (trademark: Snowlite SS; product of Maruo Calcium), 100 parts of precipitated calcium carbonate (trademark: EDS-D1-A; product of Shiraishi Kogyo), 100 parts of talc (trademark: LMR; product of Maruo Calcium), 5 parts of sodium sulfate (Ha₂SO₄·10H₂O) as a subhardening agent, 1 part of an antioxidant (trademark: Irganox 1010; product of Ciba Geigy), 1 part of an antioxidant (trademark: Tinuvin 327; product of Ciba Geigy), 1 part of an antioxidant (trademark: Sanol LS 770; product of Sankyo), 3 parts of nickel dimethyldithiocarbamate (trademark: Sandant NBC; product of Sanshin Chem.) as a light stabilizer, 3 parts of [2,2'-thiobis(4-t-octylphenolato)]-n-butylamine-nickel (trademark: SYASORB UV 1084; product of ACC) as a light stabilizer, 3 parts of a photocurable resin (trademark: Aronix M400; product of Toa gousei), 3 parts of a thixotropic agent (trademark: Disparlon #305; product of Kusumoto), 4 parts of the silane coupling agent γ-isocyanatopropyltriethoxysilane (trademark: Y-9030; product of Nippon Unicar) and 2 parts of γ-glycidoxypropyltrimethoxysilane (trademark: A-187; product of Nippon Unicar), and the mixture was kneaded up in a three-roll paint mill to give a base resin.

Separately, a curing agent composition was prepared by manually kneading 10 parts of a paraffin-based process oil (trademark: Diana Process PS-32; product of Idemitsu Kousan), 20 parts of ground calcium carbonate (trademark: Snowlite SS; product of Maruo Calcium), 4 parts of a hardening catalyst (trademark: U-220; product of Nitto Kasei), and carbon black (trademark: CB #30; product of Mitsubishi Chem.) in a disposable cup, followed by three repetitions of 10 minutes of stirring at a speed of rotation of 10,000 rpm in an Excel Auto homogenizer (product of Nippon Seiki Seisakusho).

Glass or aluminum substrates were assembled into H forms according to the method of preparing test specimens for tensile testing as prescribed in JIS A 5758-1992, the above-mentioned base resin and curing agent composition were weighed in a weight ratio of 12:1 and, after sufficient kneading, the resulting composition was filled into the H molds and cured in an oven. In all cases, the aging conditions were as follows: 23°C x 7 days + 50°C x 7 days. The substrate materials used for H-form tensile testing were the following eight species: float glass according to JIS A 5758-1992 (designated by the Japan Association of Sealing Materials Manufacturers; product of Koensha; size: 3 x 5 x 0.5 cm), anodized aluminum according to JIS A 5758-1992 (designated by the Japan Association of Sealing Materials Manufacturers; product of Koensha; size: 5 x 5 x 0.5 cm), pure aluminum according to JIS H 4000 (Taiyu Kizai's A 1100 P; size: 5 x 5 x 0.2 cm), infrared reflecting glass surface-treated by fusion bonding of Al, Cr, Fe, etc. (trademark: KL; product of Central Glass; size 5 x 5 x 0.6 cm), infrared reflecting glass surface-treated by fusion bonding of TiOx (trademark: KLS; size: 5 x 5 x 0.6 cm), infrared reflecting glass surface-coated with TiOx by sputtering (trademark: SGY-32, TCB-35; product of Central Glass; size: 5 x 5 x 0.6 cm) and infrared reflecting glass surface-coated with TiNx by sputtering (trademark: SS-14; product of Central Glass; size: 5 x 5 x 0.6 cm). Prior to filling of the test composition, the adherends were washed with methyl ethyl ketone (special reagent grade; product of Wako Pure Chemical) and wiped with a clean cotton cloth.

The H-form tensile test samples prepared by the method mentioned above were tested according to the method of tensile bond strength testing as prescribed in JIS A 5758-1992 in a constant-temperature room maintained at a temperature of 23°C and a humidity of 65 ± 5%, at a rate of pulling of 50mm/min. The results are shown in Table 3.

**Table 3**

| Example No. | Adherend species | 50% tensile stress (kgf/cm²) | Maximum tensile stress (kgf/cm²) | Elongation at maximum load (%) | State of rupture (%) | | |
|---|---|---|---|---|---|---|---|
| | | | | | CF | TCF | AF |
| 1 | Float glass | 6.8 | 7.5 | 61 | 100 | 0 | 0 |
| 2 | Anodized aluminum | 6.2 | 7.4 | 76 | 93 | 5 | 1 |
| 3 | Pure aluminum | 6.1 | 6.9 | 66 | 95 | 1 | 4 |
| 4 | SS-14 | 6.4 | 7.0 | 63 | 100 | 0 | 0 |
| 5 | SGY-32 | 6.6 | 7.1 | 61 | 98 | 2 | 0 |
| 6 | TCB-35 | 6.8 | 7.4 | 61 | 100 | 0 | 0 |
| 7 | KL | 6.4 | 6.7 | 60 | 100 | 0 | 0 |
| 8 | KLS | 6.3 | 7.4 | 69 | 100 | 0 | 0 |

### INDUSTRIAL APPLICABILITY

The curable composition of the present invention shows good weather-resistant adhesion even against transparent adherends; such as various surface-treated infrared reflecting glass species, which tends to inhibit the expression of weather-resistant adhesion.

## Claims

1. A curable composition which comprises (A) a saturated hydrocarbon polymer containing at least one crosslinking silyl group, (B) a nickel atom-containing light stabilizer, and (C) a silane coupling agent.

2. A curable composition according to Claim 1, wherein the saturated hydrocarbon polymer, namely component (A), is an isobutylene polymer having a molecular weight of 500 to 30,000.

3. A curable composition according to Claim 1, wherein the crosslinking silyl group in component (A) occurs at a terminus of the molecular chain of the saturated hydrocarbon polymer.

4. A curable composition according to Claim 1, wherein the crosslinking silyl group in component (A) is an alkoxysilyl group.

5. A curable composition according to Claim 1, wherein the silane coupling agent, namely component (C), is an isocyanate group-containing silane coupling agent.
